Europäisches Patentamt

European Patent Office

Office européen des brevets

(11) Publication number: 0 394 945
A2

# EUROPEAN PATENT APPLICATION

(21) Application number: 90107716.4

(22) Date of filing: 24.04.90

(51) Int. Cl.5: B08B 15/00

(30) Priority: 25.04.89 US 343160

(43) Date of publication of application:
31.10.90 Bulletin 90/44

(84) Designated Contracting States:
DE FR GB IT

(71) Applicant: VACUUM ENGINEERING CORP.
3374 W. Hopkins St.
Milwaukee, WI 53216(US)

(72) Inventor: Livingston, John Y.
725 Criglas Road
Wales, Wisconsin 53183(US)
Inventor: Watson, Joel W.
161 Marcella St.
Oconomowoc, Wisconsin 53066(US)

(74) Representative: Patentanwälte Grünecker,
Kinkeldey, Stockmair & Partner
Maximilianstrasse 58
D-8000 München 22(DE)

(54) System for removal of asbestos material.

(57) A system for removal of asbestos material comprises a pair of collection and discharge units. Each unit includes a housing, a hopper mounted to the housing, and a slide gate valve or valves for selectively sealing and opening the associated hopper. A vacuum line and a collector tube are connected to each hopper. Suitable valves are installed in the vacuum lines and collector tubes. By controlling the slide gate valves and the vacuum line and collector tube valves, a vacuum can be created in the hoppers alternately to draw material into a selected hopper. With the vacuum dissipated from a hopper, the sliding gate valve is operable to discharge material from that hopper while the other hopper is being filled, thereby enabling material to be continuously removed from the source.

# SYSTEM FOR REMOVAL OF ASBESTOS MATERIAL

## Background of the Invention

### 1. Field of the Invention.

This invention pertains to environmental protection, and more particularly to the collection and disposal of hazardous and, toxic substances.

### 2. Description of the Prior Art.

It is now well known that building materials containing asbestos can have a harmful effect on the health of the building occupants. For that reason, much time, expense, and effort are being expended to remove asbestos materials from buildings.

Exemplary apparatus for removing and collecting asbestos materials from buildings is described in my co-pending U.S. patent application Serial Number 199,028, the specification of which is incorporated by reference herein. Briefly, the apparatus of U.S. patent application Serial Number 199,028 comprises a vacuum system for collecting asbestos bearing material into a hopper. A slide gate valve within a housing is manually between opened and closed positions to permit and block, respectively, discharge of the material from the hopper through a spout and into an asbestos bag. An overcenter lock assures sealing contact with the mouth of the hopper when the valve gate is in the closed position. With the valve gate closed and an asbestos bag in place, the housing is completely isolated from the atmosphere so that no asbestos particles can escape.

The asbestos collection apparatus of U.S. patent application Serial Number 199,028 works very well. Nevertheless, it is considered desirable to more efficiently discharge the collected materials from the hopper into the bags. Specifically, with the prior collection apparatus the vacuum collection of the material into the hopper must be stopped each time the hopper becomes full and the slide gate valve is opened to discharge collected material into a bag. Only after the bag is filled and the valve gate is closed and sealed can the vacuum system be restarted. The intermittent operation of the vacuum collection system results in unproductive time in the actual removal of material from the source.

Thus, a need exists for improved apparatus for collecting and discharging asbestos material.

## Summary of the Invention

In accordance with the present invention, a system for the removal of asbestos material is provided that enables the material to be continuously collected from a source. This is accomplished by apparatus that includes one or more hoppers together with means for controlling material collection into and discharge from the hoppers.

Each hopper is mounted to the top of an enclosed housing. Each housing has a discharge spout directly below the hopper. A manually operated slide gate valve within each housing is selectively operable between an opened position wherein the material collected in the associated hopper falls by gravity through the spout into a waiting bag, and a closed position wherein the material remains sealed in the hopper.

To provide continuous collection of the asbestos material from the source, a common collector tube is branched to connect to both hoppers. Suitable shut off valves are installed in each of the collector tube branches. In a similar manner, a common vacuum line leading from a vacuum pump is branched to both hoppers. Each branch of the vacuum line has a shut off valve.

In operation, the branch collector tube valve and the branch vacuum line valve associated with one of the hoppers are controlled open, and the branch collector tube and branch vacuum line valves associated with the other hopper are closed. Asbestos material from the source is collected into the hopper connected to the open valves. When that hopper is full, the valves in the branch collector tube and vacuum line associated with the filled hopper are closed, and the valves associated with the other hopper are opened. Asbestos material then flows into the second hopper. While the second hopper is being filled, the slide gate valve of the first hopper is operated to discharge the material collected therein into a bag. After installing a new bag, the valves can be switched again, so that the first hopper is filling while the second hopper is being emptied. In that manner, asbestos material can be continuously removed from the source, with the material being collected in and simultaneously discharged from alternate hoppers.

Other objects and advantages of the invention will become apparent to those skilled in the art upon reading the description of an illustrative embodiment of the invention which is presented hereafter in reference to the drawings.

## Brief Description of the Drawings

Fig. 1 is a perspective view of the system for removing asbestos material.

Fig. 2 is a front view of the system for removing asbestos material.

Fig. 3 is a cross sectional view taken along lines 3--3 of Fig. 1.

Fig. 4 is an enlarged cross sectional view taken along lines 4--4 of Fig. 2.

Fig. 5 is an elevational view of the linkage for raising and lowering a sliding gate valve which is in the fragmentarily shown housing, said linkage being isolated and enlarged relative to Fig. 1 from which the linkage is taken, the linkage being operated to a condition which results in the gate valve being in its unlatched or lowermost portion as also shown in Fig. 4.

Fig. 6 is similar to Fig. 5 except that the linkage has been operated to a condition which results in the gate valve being in its uppermost or latched condition as is the case in Figs. 2 and 3.

Fig. 7 is a plan view of the linkage shown in Fig. 6

## Detailed Description of the Invention

Although the disclosure hereof is detailed and exact to enable those skilled in the art to practice the invention, the physical embodiments herein disclosed merely exemplify the invention which may be embodied in other specific structure. The scope of the invention is defined in the claims appended hereto.

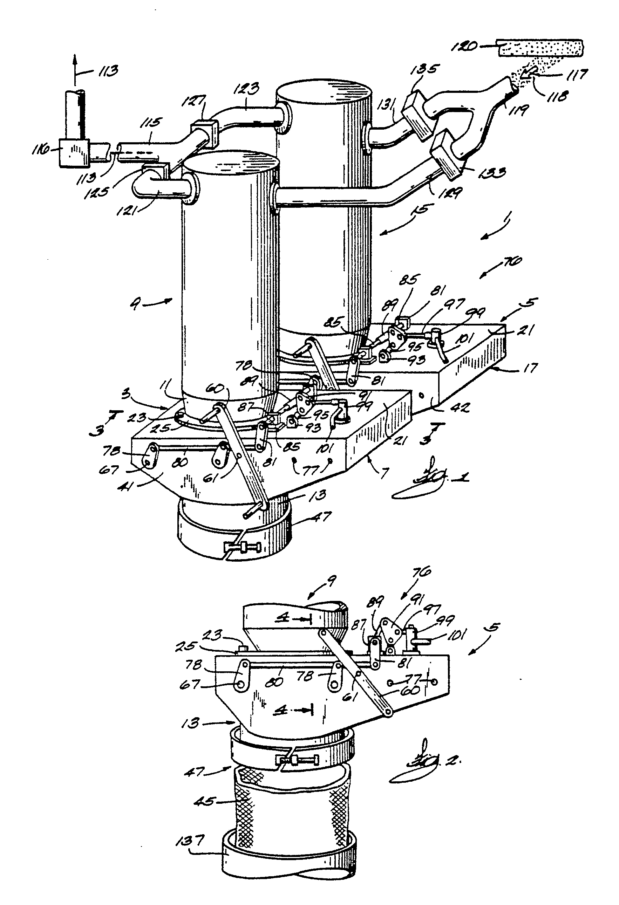

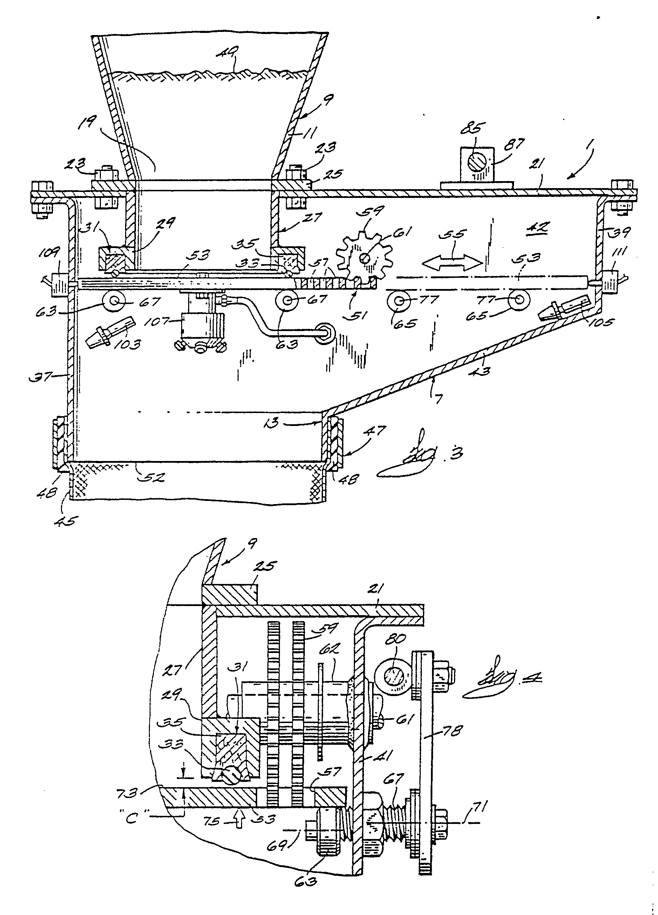

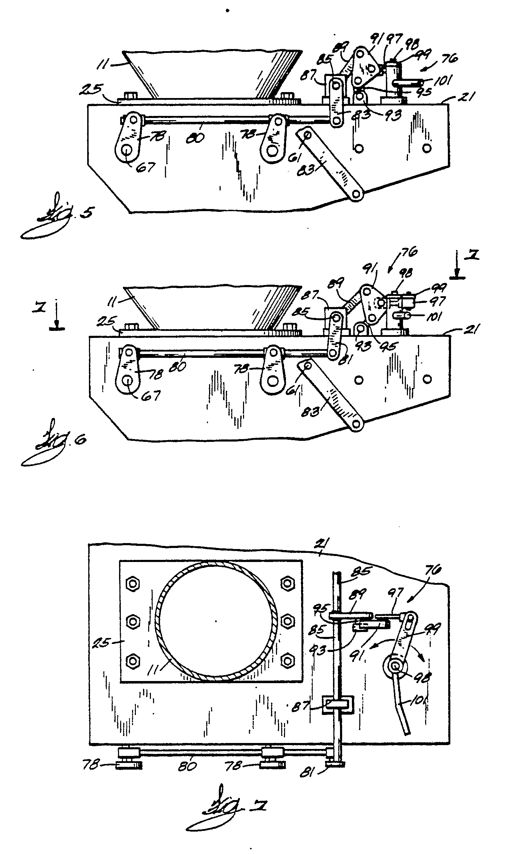

Referring to Fig. 1, a material collection and discharge system 1 is illustrated that includes the present invention. The collection and discharge system 1 is particularly useful for removing asbestos contaminated material 118 from a representative source 120, but it will be understood that the invention is not limited to use with hazardous materials.

The asbestos removal system 1 comprises two generally similar collection and discharge units 3 and 5 which are preferably fixed to a suitable structural frame, not illustrated. The collection and discharge units and structural frame may be mounted on a truck or similar vehicle, not shown in Fig. 1, for convenient transportation between job sites. Mounting of the collection and discharge units and frame to the truck may be by hydraulically operated beams and other supports that raise and lower the units into working and inoperative positions, respectively. Such beams and supports and their hydraulic controls are not illustrated in the drawings, as those components are well known to persons skilled in the relevant arts and form no part of the present invention.

Typical collection and discharge unit 3 comprises an enclosed housing 7, to the top of which is mounted a storage hopper 9. The hopper 9 is depicted as being generally cylindrical in shape with a partially conical lower end 11. However, the hopper may be formed in a variety of other shapes to suit the requirements of the particular user. To the underside of the housing 7 is fixed a discharge spout 13.

The other collection and discharge unit 5 comprises a hopper 15, a housing 17, and a spout that are substantially similar to the corresponding components of the unit 3. The other components of the two collection and discharge units are also generally identical to each other. Accordingly, a description of the components of one of the units will be adequate.

As shown in Fig. 3, each hopper, such as hopper 9, is fabricated as an enclosed air-tight thin walled vessel. The lower end 11 of the hopper forms the hopper discharge mouth 19. The hopper is mounted to a top plate 21 of the housing 7 by a flange 25. The hopper flange 25 is sealed to the housing plate 21 in an air-tight manner by fasteners 23. Joined to the flange 25 is a tube 27 that passes through an opening in the housing top plate. The lower end of the tube 27 has an outwardly extending annular flange 29. In the bottom face of the flange 29 is installed an annular combination seal 31. The combination seal 31 is preferably composed of an O-ring 33 and a wiper 35.

In addition to the top plate 21, the housing 7 comprises opposed end walls 37 and 39, a front wall 41, a back wall 42, and a sloped bottom wall 43. The bottom spout 13 is preferably a short circular tube, and it may be integrally joined to the lower ends of the housing walls 37, 41, 42, and 43. Except for the spout 13 and the hopper mouth 19, the housing is fully enclosed.

The spout 13 has a diameter slightly less than the diameter of a conventional asbestos bag 45. Surrounding the spout and retained thereon is a bag clamp 47. The clamp 47 is shown in the clamped position in Fig. 3. The bag clamp includes a compressible ring 48. When the clamp is actuated, the compressible ring 48 extends below and overlaps the spout end face 52, thereby assuring a positive seal between the spout and the bag. Consequently, when the inside of the bag 45 is washed down (as will be explained hereinafter), no material will remain in the upper portion of the bag. Thus, when the bag is removed from the spout it will be free of contaminants in the closure portion thereof.

To control the flow of material 49 collected in the hopper 9, a slide gate valve 51 is installed in the housing 7. The slide gate valve 51 comprises a flat valve gate 53 that is horizontally translatable within the housing in the directions of arrow 55. To translate the valve gate 53, it is formed with a series of openings 57 extending vertically therein. Also see Fig. 4. The openings 57 are designed to mesh With the teeth of a cog 59 that is mounted on shaft 61 for rotation about a horizontal axis. The shaft 61 is mounted for rotation in bearings 62 in the housing opposed front and back walls 41 and 42, respectively. Rotating the shaft 61 clockwise with respect to Fig. 3 causes the gate to translate to the left, that is, to a position under the hopper mouth 19 and tube 27. Rotating the shaft 61 counterclockwise with respect to Fig. 3 causes the gate to translate to the right to the position indicated by the phantom lines 53', thereby uncovering the hopper mouth.

To rotate the shaft 61 and cog 59 for translating the valve gate 53, the shaft 61 extends through the housing front wall 41. The shaft 61 terminates on the outside of the housing 7 in a handle 60. Also see Fig. 2. Thus, by turning the handle 60 on the outside of the housing, the valve gate is translated inside the housing.

To support the valve gate 53 within the housing 7, the slide gate valve 51 further comprises a series of rollers. The rollers are mounted in the housing front and back walls 41 and 42, respectively. At least three sets of rollers 63 are used in the vicinity of the hopper tube 27, and at least two additional sets 65 are employed remote from the tube 27 and close to the housing end wall 39. The rollers 63 are mounted on eccentric shafts 67 that pivotally extend through the housing front and back walls. With the shafts 67 in the position shown in Fig. 4, the roller center lines 69 are at locations below the associated shaft center lines 71. In that condition, the valve gate 53 is in an unlatched position, resting on the rollers 63 such that there is a clearance "C" between the seal 31 and the upper surface 73 of the gate. By rotating the shafts 67 by a mechanism to be described presently, the rollers 63 are moved upwardly with respect to Figs. 3 and 4. In turn, the rollers raise the gate a short distance in the direction of arrow 75. Raising the gate places it in a latched position, wherein the clearance "C" is taken up, and the gate upper surface 73 is forced against the seal 31, as shown in Fig. 3. Only when the gate is in the lowered or unlatched position of Fig. 4, away from the seal 31, is the handle 60 rotated to turn the cog 59 and translate the gate in the directions of arrow 55.

The rollers 65 are mounted on stub shafts 77 that are fixed to the housing front and back walls 41 and 42, respectively. The center lines of the shafts 77 and rollers 65 coincide, and those center lines are in line with the center lines 69 of the rollers 63 when the rollers 63 are in the lowered position of Fig. 4. Thus, with the rollers 63 in the lowered position, the unlatched valve gate 53 slides easily over the rollers 63 and 65 under the influence of the cog 59.

To rotate the eccentric shaft 67 for latching and unlatching the valve gate 53 of each collection and discharge unit 3 and 5, respective control linkages 76 are employed. The control linkages are shown in Figs. 1 and 2 and are shown enlarged in Figs. 5-7. The control linkages 76 of the two collection and discharge units may be mirror images of each other, Fig. 1. Each control linkage includes short levers 78 that are fixed at one end to the ends of respective shafts 67, which protrude outside the housing walls 41 and 42. The second ends of the respective levers 78 are pivotally connected to a common tie rod 80. One end of the tie rod 80 is connected to another lever 81 that is pivotable by means of shaft 85 in a bearing block 87. To the shaft 85 is fixedly mounted one end of a short arm 89. The second end of the arm 89 is rotatably fastened to one corner of a triangular link 91. A second corner of the triangular link 91 is pivotally connected to a toggling overcenter link 95 which is pivotally connected to a block 93 on the housing top plate 21. The third corner of the triangular link 91 is pivotally connected to one end of a rod 97. The second end of the rod 97 is pivotally connected to a lever 99 that extends rigidly from a sleeve 96 about the vertical axis of a spindle 98. A handle 101 is fastened to sleeve 96. By pushing the handle 101 of the lever 99 forwardly toward the hoppers 9 and 15, the short levers 78 of the respective control linkages are rotated to lower the rollers 63 and unlatch the valve gate from the hopper tube seal 31. Such a condition is shown in Figs. 1, 4 and 5. Pushing handle 101 backwardly away from the associated hopper operates the levers 78 to latch the corresponding valve gate in a sealed position against the hopper seal 31. The latched condition is shown in Figs. 2, 3 and 6. The arm 89, triangular link 91, and link 95 form an overcenter lock such that the valve gate is positively latched in place when the corresponding handle 101 is in the back position. This results from the way the link 95 toggles overcenter in Fig. 6 as compared with Fig. 5.

The housings 7 and 17 of the asbestos collection system 1 are self-cleanable of asbestos material. For that purpose, the inside surfaces of the walls 37, 39, 41, 42, and 43 of each housing are coated with a non-stick material. The internal moving parts are stainless steel. To remove as much asbestos material as possible from each housing, a water flushing system is employed. Front nozzles 103 are directed onto the wall 37, and nozzles 105 are located near the end wall 39. Multiple nozzles 107 are mounted to the underside of the valve gate 53. The various nozzles are arranged to wash the asbestos dust and particles from virtually the entire interior surfaces of the housings and into the bags 45 for the asbestos.

To control operation of the new asbestos collection system 1 various devices may be used that actuate in response to the performance of other components. For example, a first limit switch 109 may be mounted to each housing wall 37 for sensing when the associated valve gate 53 is in the closed position under the hopper mouth 19. Actuation of the limit switch 109 by the closed gate is necessary to start operation of a vacuum system for collecting material 118, fed from the main source 120 in the respective hoppers 9 or 15 where the asbestos material is marked 49 in Fig. 3. Another limit switch 111 can be used to sense the opened valve gate and start operation of a mechanical loading device, not shown, that forces the asbestos material 49 through the hopper mouth 19 and tube 27 and into a bag 45.

It is a feature of the present invention that the asbestos material 118 is drawn on a continuous basis from the source 120 and is collected alternately into hoppers 9 and 15. With particular attention to Fig. 1, arrow 113 represents the flow of air from the hoppers as evacuated therefrom by a vacuum line 115. The vacuum line 115 is connected to a heavy duty vacuum pump 116. Arrow 117 represents the flow of asbestos material 118 from a typical source 120 into the hoppers through a collector tube 119 as drawn by the vacuum pump 116.

To control vacuum creation in the hoppers 9 and 15, the vacuum line 115 has two branches leading therefrom, with vacuum line branch 121 leading to hopper 9 and branch 123 leading to hopper 15. Installed in the vacuum branch line 121 is a vacuum shut off valve 125. A similar vacuum shut off valve 127 is installed in the branch line 123. To direct the flow of asbestos material 118 alternately into the hoppers 9 and 15, the collector tube 119 is formed with two branches 129 and 131. Collector branch 129 leads to hopper 9, and collector branch 131 leads to hopper 15. A shut off valve 133 is installed in collector branch tube 129. A second shut off valve 135 is installed in the collector branch tube 131.

In operation, the asbestos removal system 1 is transported to a location as close as possible to the asbestos source 120. The hydraulic system on the vehicle, not shown, on which the asbestos removal system is mounted is operated to place the collection and discharge units 3 and 5 in an operative position relative to the ground. Normally, when in the operative position 55-gallon drums 137 as in Fig. 2 can be placed on the ground under the spouts 13 for holding the asbestos bags 45 for the asbestos material. The bag clamps 47 are opened. The mouth of a bag is placed over the discharge spout of each collection unit 3 and 5, and the bag clamps are closed.

For safety purposes, the asbestos collection system controls are designed such that both slide gate valves 51 of the collection unit 3 or 5 must be cycled at the start of the asbestos removal operation. For that purpose, the handle 101 of each control linkage 76 is pushed forwardly toward the respective hoppers 9 and 15 to unlock the overcenter locks that include arms 89 and links 91 and 95. The valve gates 53 are thus opened. Turning the handles 60 translate the respective valve gates 53 to uncover the hopper mouths 19 and actuate the rear control limit switches 111. Each valve gate handle 60 is then turned to translate the respective valve gates under the hopper mouths. Pushing the control linkage handles 101 backwardly away from the hoppers causes the valve gates to close and seal against the respective tube seals 31, so that a vacuum can be created in the hoppers to draw asbestos material 118 into them. Closing the valve gates actuates the limit switches 109, which also form a part of the controls for the hopper vacuum system.

After the slide gate valves 51 of both collection units 3 and 5 have been cycled and both valve gates 53 are closed, the vacuum pump 116 is energized. Although the system 1 may be operated such that material 118 is collected into both hoppers 9 and 15 serially, it is preferred that the material be collected into one hopper, while it is being discharged from the other. It will be assumed that hopper 9 is to be filled first. Accordingly, vacuum valve 125 is controlled open, and vacuum valve 127 is controlled closed. Consequently, a vacuum is produced in hopper 9. The valve 133 in collector tube branch 129 is opened, with valve 135 in collector branch 131 being closed. As a result, material 118 is drawn through collector tube 119 and collector branch tube 129 in the direction of arrow 117 into the hopper 9.

When the hopper 9 has a sufficient quantity of asbestos material 49 collected in it, the asbestos removal system controls are actuated to close vacuum valve 125 and collector valve 133, and to open vacuum valve 127 and collector valve 135. Material 118 then flows from the source 120 to the hopper 15. While the hopper 15 is being filled, hopper 9 can be emptied. To empty a hopper, the associated handle 101 is pushed forwardly toward the hopper to unlock the overcenter lock of the control linkage 76 and unlatch the gate valve 53. The gate valve handle 60 is turned to slide the valve gate from under the hopper mouth 19 and to actuate the limit switch 111. An optional mechanical unloading device inside the hopper, not illustrated, is energized to assist discharge of material 49 into the waiting bag 45 below. When the bag is full or the hopper is empty, the valve gate handle 60 is rotated to slide the valve gate under the hopper mouth 19. The handle 101 is pushed to latch and seal the valve gate against the tube seal 31. Then suitable control valves are opened to furnish water to the spray nozzles 103, 105, and 107. The nozzles are directed to wash the interiors of the housings 5 and 7. Water is sprayed until only clear water is washed down to the asbestos bag 45 The bag is necked down under the spout 13 and tightly tied. The bag clamp 47 is unclamped, the filled bag is removed, and a new bag is installed. In that manner, the slide gate valve 51 and the rest of the housing interior are isolated from the hopper interior and from the atmosphere until material is again to be collected into and discharged from the corresponding hopper.

While the hopper 9 of the collection and discharge unit 3 is being emptied, material 118 is continuously being carried from the source 120 and is filling the hopper 15 of the collection and discharge unit 5. As soon as the hopper 9 has been emptied, the material 49 in the hopper 15 can be emptied. For that purpose, the vacuum valve 125 and collector valve 133 are reopened. Vacuum valve 127 and collector valve 135 are closed. The handles 60 and 101 of the collector and discharge unit 5 are operated as previously described to empty hopper 15 as the hopper 9 is being filled. In that manner, asbestos material 118 at the site 120 can be continuously removed and collected into alternate hoppers without interruptions due to hopper emptying.

Thus, it is apparent that there has been provided, in accordance with the invention, a system for removal of asbestos material that fully satisfies the aims and advantages set forth above. While the invention has been described in conjunction with specific embodiments thereof, it is evident that many alternatives, modifications, and variations will be apparent to those skilled in the art in light of the foregoing description. Accordingly, it is intended to embrace all such alternatives, modifications, and variations as fall within the spirit and broad scope of the appended claims.

**Claims**

1. A system for removal of asbestos material comprising:
a. at least two collection and discharge units, each collection and discharge unit comprising:
i. a generally enclosed housing;
ii. hopper means mounted to the housing for collecting the material; and
iii. gate valve means located in the housing for controlling the discharge of the material collected in the hopper means;

b. collector means connected to the hopper means of each collection and discharge unit for carrying asbestos material from a source thereof to the hopper means of each collection and discharge unit;
c. vacuum means connected to the hopper means of each collection and discharge unit for drawing the asbestos material from the source thereof into the hopper means; and
d. valve means for enabling asbestos material to flow into the hopper means of a selected collection and discharge unit and for blocking material flow into the hopper means of the other collection and discharge unit,
so that asbestos material can be continuously carried from the source thereof and collected in the hopper means of alternate collection and discharge units by selective actuation of the valve means.

2. The system of claim 1 wherein the collector means comprises:
a. a collector tube for carrying asbestos material from the source thereof; and
b. a respective collector branch tube leading from the collector tube to the hopper means of each collection and discharge unit.

3. The system of claim wherein the vacuum means comprises:
a. a vacuum pump;
b. a vacuum line leading to the vacuum pump; and
c. a respective vacuum branch line leading from the vacuum line to the hopper means of each collection and discharge unit.

4. The system of claim 1 wherein the valve means comprises:
a. vacuum valve means installed in the vacuum means for controlling the vacuum produced by the vacuum means in at least a selected one of the hopper means of the collection and discharge units; and
b. collector valve means installed in the collector means for controlling the flow of asbestos material from the source thereof to the hopper means of at least a selected one of the collection and discharge units in response to the vacuum produced therein by the vacuum means and the vacuum valve means.

5. The system of claim 1 wherein:
a. the collector means comprises a collector tube for carrying asbestos material from the source thereof, and a respective branch tube joining the collector tube to the hopper means of each collection and discharge unit;
b. the vacuum means comprises a vacuum line connected to a vacuum source, and a respective branch line joining the vacuum line to the hopper means of each collection and discharge; and

c. the valve means comprises a shut off valve in each of the collector tube branch tubes and in each of the vacuum line branch lines, the shut off valves in the branch collector tubes cooperating with the shut off valves in the branch vacuum lines to alternately enable and block flow of asbestos material to the hopper means of a selected collection and discharge unit.

6. Apparatus for collecting and discharging material comprising:

a. first and second hopper means for collecting material therein;

b. vacuum means for creating a vacuum in a selected one of the hopper means; and

c. collector means for carrying material from a source thereof to a selected one of the hopper means in response to the creation of a vacuum therein by the vacuum means,

so that a vacuum can be created and material collected in alternate hopper means.

7. The apparatus of claim 6 further comprising first and second gate means for selectively cooperating with the respective hopper means to seal the hopper means and permit the creation of a vacuum therein and for unsealing the hopper means to enable the material collected therein to be discharged therefrom,

so that the hopper means can be alternately filled and emptied of material

8. The apparatus of claim 6 wherein the vacuum means comprises:

a. a vacuum pump;

b. first and second vacuum lines connecting the respective hopper means to the vacuum pump; and

c. vacuum valve means installed in the first and second vacuum lines for controlling the vacuum created in the respective hopper means,

so that a vacuum can be created alternately in the first and second hopper means.

9. The apparatus of claim 6 wherein the collector means comprises:

a. first and second collector tubes connected to the respective hopper means; and

b. collector valve means installed in the first and second collector tubes for selectively enabling and blocking carrying of material from the source thereof to a selected one of the hopper means in response to the creation of a vacuum therein by the vacuum means.

10. The apparatus of claim 6 wherein the vacuum means comprises:

a. a vacuum pump;

b. a vacuum line connected to the vacuum pump;

c. first and second vacuum branch lines connecting the vacuum line to the respective first and second hopper means; and

d. first and second vacuum valve means installed in the respective vacuum branch lines for creating a vacuum in a selected hopper means.

11. The apparatus of claim 10 wherein the collector means comprises:

a. a collector tube for carrying material from a source thereof;

b. first and second collector branch tubes connecting the respective first and second hopper means to the collector tube; and

c. first and second collector valve means installed in the respective collector branch tubes for selectively enabling and blocking material flow from the source thereof to the respective hopper means in response to the creation of a vacuum in the selected hopper means,

so that the first and second vacuum valve means and the first and second collector valve means cooperate to carry material to alternate hopper means.

12. A method for removing asbestos material comprising:

a. providing first and second hoppers;

b. creating a vacuum in the first hopper;

c. drawing asbestos material from a source thereof to the first hopper by means of the vacuum created therein;

d. dissipating the vacuum in the first hopper and simultaneously creating a vacuum in the second hopper; and

e. drawing asbestos material from the source thereof into the second hopper and simultaneously discharging asbestos material from the first hopper.

13. The method of claim 12 comprising the further steps of:

a. dissipating the vacuum in the second hopper and simultaneously creating a vacuum in the first hopper; and

b. drawing asbestos material from the source thereof into the first hopper and simultaneously discharging asbestos material from the second hopper,

so that asbestos material is alternately collected into and discharged from the first and second hoppers.

Fig. 1

Fig. 2

*Fig. 3*

*Fig. 4*

Fig. 5

Fig. 6

Fig. 7